# FASCICULE DE BREVET EUROPEEN

(11) **EP 3 867 315 B1**
(45) Date de publication et mention de la délivrance du brevet: **24.08.2022**
(21) Numéro de dépôt: 19806310.9
(22) Date de dépôt: 17.10.2019
(51) Int. Cl.: C08L 77/06, C08G 69/36, C08G 69/40

(54) **COMPOSITION POLYMERIQUE TRANSPARENTE**
TRANSPARENTE POLYMERZUSAMMENSETZUNG
TRANSPARENT POLYMERIC COMPOSITION

(30) Priorité: 17.10.2018 FR 1859606
(43) Date de publication de la demande: 25.08.2021
(73) Titulaire: ARKEMA FRANCE, 92700 Colombes (FR)
(72) Inventeur: SABARD, Mathieu, SERQUIGNY 27470 (FR); BLONDEL, Philippe, BERNAY 27300 (FR); SAILLARD, Benjamin, SERQUIGNY 27470 (FR); MALET, Frédéric, 69493 PIERRE-BENITE CEDEX (FR)
(74) Mandataire: Arkema Patent
(86) Numéro de dépôt international: PCT/FR2019/052459
(87) Numéro de publication internationale: WO 2020/079371

(56) Documents cités:
- WO-A1-2017/198949
- US-A1- 2010 140 846
- US-A1- 2016 369 098

## Description

### [Domaine technique]

La présente demande de brevet concerne une composition polymérique transparente, utile notamment pour la fabrication d'articles optiques, ainsi qu'un procédé pour sa fabrication. Elle concerne également l'utilisation de ladite composition polymérique transparente pour la fabrication d'articles optiques, notamment par injection.

### [Technique antérieure]

On connaît les propriétés intéressantes des polyamides en vue de la fabrication d'articles transparents tels que des cadres de lunettes, des boîtiers, des accessoires de véhicules motorisés, des matériaux chirurgicaux, des emballages ou des articles sportifs. On apprécie en particulier leurs bonnes propriétés mécaniques, telles qu'une résistance élevée à la traction et/ou à la compression et aux attaques externes, notamment vis-à-vis de la chaleur, des produits chimiques et des rayonnements UV, ainsi que leur bonne transparence.

Néanmoins, la résistance à l'impact des polyamides est limitée et peut freiner leur utilisation dans certaines applications.

La demande EP 3 215 568 A1 propose une composition transparente présentant une résistance à l'impact améliorée, dans laquelle on ajoute au polyamide un polymère sous forme de particules cœur/couche (aussi appelées particules cœur-écorce) spécifique. La résistance au choc des compositions exemplifiées est intéressante, mais pas suffisante pour leur utilisation pour des applications particulièrement exigeantes (lunettes de sport, lunettes de sécurité, masque de protection,...).

Par ailleurs, la demande WO 2012/042162 A1 propose d'utiliser des copolymères à blocs polyéther et polyamide (PEBA) particuliers, éventuellement avec jusqu'à 70% en poids d'un polyamide amorphe transparent, pour fabriquer des articles transparents présentant une résistance au choc améliorée. Ces compositions présentent généralement des propriétés mécaniques insuffisantes pour la plupart des applications optiques, notamment en termes de rigidité.

### [Résumé de l'invention]

Un objectif de la présente invention est donc de proposer une composition polymérique transparente à base de polyamide présentant une résistance au choc améliorée, tout en conservant voire améliorant les propriétés optiques et mécaniques.

En effet, la présente invention repose sur la constatation que la modification d'un polyamide amorphe par un polymère sous forme de cœur/écorce et un copolymère à blocs polyéther et polyamide en combinaison permet d'optimiser les propriétés choc, notamment à froid, et en particulier jusqu'à - 30°C, tout en conservant d'excellentes caractéristiques optiques et mécaniques, notamment en termes de transmittance, de valeur de Haze et de rigidité.

Aussi, selon un premier aspect, l'invention a pour objet une composition polymérique à base de polyamide comprenant :
a) 50 à 98% en poids d'un polyamide amorphe transparent ;
b) 1 à 15% en poids d'un polymère sous forme de particules cœur-écorce ; et
c) 1à 15% en poids d'un copolymère à blocs polyéther et blocs polyamide, caractérisée en ce que ledit copolymère à blocs polyéther et blocs polyamide présente :
   - en couche de 2 mm, une transmittance en à 560 nm de 90% ou plus et
   - un indice de réfraction ne différant pas plus de 0.01 de celui du polyamide amorphe transparent,
et en ce que le polymère sous forme de particules cœur-écorce présente un indice de réfraction ne différant pas de plus de 0.01 de celui du polyamide amorphe transparent.

Cette composition polymérique présente, en couche de 2 mm, avantageusement une transmittance à 560 nm de 80% ou plus, de préférence 85% ou plus, avantageusement 88% ou plus et tout particulièrement 90% ou plus et une valeur de Haze de pas plus de 10%, de préférence pas plus de 7%, de préférence pas plus de 6% et tout particulièrement pas plus de 5%.

De préférence, le polymère sous forme de particules cœur-écorce ne comporte pas plus de 10% en moles de monomères aromatiques.

Avantageusement, polyamide amorphe transparent est choisi parmi les polyamides TMDT, TMDI, TMD18, TMD14, TMD12, TMD10, MPMDT, MPMDI, MPMD18, MPMD14, MPMD12, MPDM10, B10, B11, B12, B13, B14, B16, B18, B19, B20, B21, BI, P10, P11, P12, P13, P14, P16, P18, P19, P20, PI, P21, 11/B I, 11/BT, 12/B I, 12/B T, 11/B10, 12/B10, 11/P10, 12/P10, 11/B12, 12/B12, 11/P12, 12/P12, 11/B14, 12/B14, 11/P14, 12/P14, 11/B18, 12/B18, 11/P18, 12/P18, 6.10/BI, 6.10/BT, 10.10/BI, 10.10/BT, 6.12/BI, 612/BI, 1012/BI, 1012/BT, 610/PI, 610/PT, 1010/PI, 1010/PT, 612/PI, 612/PT, 1012/PI, 1012/PT, 610/B10, 610/B12, 610/B14, 610/B18, 1010/B10, 1010/B12, 1010/B14, 1010/B18, 1012/B10, 1012/B12, 1012/B14, 1012/B18, 610/P10, 610/P12, 610/P14, 610/P18, 1010/P10, 1010/P12, 1010/P14, 1010/P18, 1012/P10, 1012/P12, 1012/P14, 1012/P18, B10/P10, B12/P12, B14/P14 12/B I/BT, 11/BI/BT, 12/PI/PT, 11/P I/PT, 11/B10/BT, 11/B12/BT, 11/P10/PT, 12/B10/BI, 12/B12/BI, 12/P10/PI, 12/P12/PI, 12/B10/BT, 12/B12/BT, 12/P10/PT, 12/P12/PT, 11/B10/BI, 11/B12/BI, 11/P10/PI, 11/P12/PI, 11/P12/PT, 11/B10/B14, 11/P10/P14, 11/B12/B14, 11/P12/P14, 12/B10/B14, 12/P10/P14, 12/B12/B.4, 12/P12/P14, 11/B10/B12, 11/P10/P12, 12/B10/B12, 12/P10/P12, 11/P12/B12, 12/P12/B12, 11/P10/B10, and 12/P10/B10 12/BI, 12/BT, B12, 11/B14 et 11/B10.

Selon un mode de réalisation particulièrement préféré, le polyamide amorphe transparent est le 11/B10. Lorsqu'il s'agit du polyamide 11/B10, le ratio molaire de l'aminoacide undecanoïque par rapport au nombre de moles de diamine/diacide formant le polyamide dans le polyamide amorphe transparent est de préférence compris entre 0.01 et 0.5, de préférence entre 0.1 à 0.4, et encore préférée entre 0.2 et 0.3.

Le polyamide amorphe transparent peut être composé d'un seul polyamide, notamment amorphe, ou comprendre plusieurs polyamides en mélange, notamment aussi un ou plusieurs polyamides semi-cristallins. Lorsqu'il s'agit d'un mélange, il peut être composé de polyamides amorphes seuls ou comprendre des quantités limitées de polyamides semi-cristallins.

Le polyamide amorphe transparent peut en particulier comporter une proportion minoritaire, typiquement jusqu'à 50%, de préférence jusqu'à 40% et encore préféré jusqu'à 30% en poids, par rapport au poids du polyamide amorphe fini, d'au moins un polyamide semi-cristallin, par exemple un polyamide aliphatique.

De préférence, le polymère sous forme de particules cœur-écorce comprend une couche (A) comprenant un polymère (A1) ayant une température de transition vitreuse Tg_{A1} inférieure à 0°C et une couche (B) comprenant un polymère (B1) ayant une température de transition vitreuse Tg_{B1} supérieure à 60°C. Avantageusement, le polymère (B1) est un polymère (méth)acrylique. De préférence, le polymère (B1) comprend au moins 80 % en poids de monomère méthacrylate d'alkyle en C1 à C4 et/ou de monomères acrylate d'alkyle en C1 à C8.

Selon un deuxième aspect, l'invention vise un procédé de fabrication d'une composition polymérique à base de polyamide telle que décrite ci-dessus, comprenant l'étape de mélange de :
a) 50 à 98% en poids d'un polyamide amorphe transparent ;
b) 1 à 15% en poids d'un polymère sous forme de particules cœur-écorce ; et
c) 1 à 15% en poids d'un copolymère à blocs polyéther et blocs polyamide, caractérisée en ce que ledit copolymère à blocs polyéther et blocs polyamide présente :
   - en couche de 2 mm, une transmittance à 560 nm de 90% ou plus ;
   - un indice de réfraction ne différant pas plus de de celui du polyamide amorphe
      transparent et
      en ce que le polymère sous forme de particules cœur-écorce présente un indice de
      réfraction ne différant pas de plus de 0.01 de celui du polyamide amorphe transparent. De préférence, le polymère sous forme de particules cœur-écorce ne comporte pas plus de 10% en moles de monomères aromatiques.

Selon un troisième aspect, l'invention vise une composition polymérique susceptible d'être obtenue par ledit procédé.

Selon un quatrième aspect, l'invention vise l'utilisation de ladite composition polymérique pour la fabrication par injection d'articles transparents.

Selon un cinquième et dernier aspect enfin, l'invention vise un article comprenant ladite composition, notamment dans au moins une partie ou une couche. Un tel article peut être en particulier un objet moulé, une feuille, un profilé, un tube, un corps creux ou un filtre optiquement variable ou une lentille optique, de préférence une lentille ophtalmique, de manière particulièrement préférée un élément à effet de filtre spectral, p. ex. sous la forme d'un verre de lunettes, d'un verre de lunettes de soleil, d'un verre correcteur, d'un filtre optique, de verres d'inspection, de lunettes de sport ou de lunettes de ski, de visières, de lunettes de sécurité, de systèmes d'enregistrement optiques, de débitmètres, de disques de rupture, d'écrans, de stockages de données optiques, de boîtiers ou de parties de boîtiers, notamment pour appareils de rasage, appareils d'épilation, dispositifs de mesure, ou une fenêtre dans des bâtiments ou dans des véhicules, ou est un élément décoratif ou un élément structural, par exemple sous la forme d'un cadre de lunettes ou de cambres de lunettes, d'un jouet, ou sous la forme d'une partie d'une chaussure de sport, ou d'un équipement de golf, notamment d'une balle de golf, ou d'un couvercle, notamment sous la forme d'un boîtier de téléphone portable, d'une partie d'un équipement électronique, de supports de stockage, de clés infrarouges, de dispositifs enregistreurs transportables, d'assistants personnels numériques, de smartphones, d'un revêtement, notamment d'un emballage, d'éléments décoratifs, ou d'un équipement de sport, ou d'un placage, de préférence dans le secteur automobile.

### [Description des modes de réalisation]

### Définition des termes

On entend par le terme « **Composition polymérique** » désigner un mélange macroscopiquement homogène comprenant un ou plusieurs polymères. Le terme englobe également de telles compositions composées de phases non miscibles entre elles et dispersées à échelle micrométrique.

On entend par le terme « **copolymère** » désigner un composé issu de la polymérisation d'au moins deux types de monomère chimiquement différents, appelés comonomères. Un copolymère est donc formé d'au moins deux motifs de répétition distincts. On distingue les copolymères à enchaînement aléatoire, alterné et statistique, qui sont des matériaux homogènes des copolymères séquencés (nommés aussi copolymères blocs) lesquels présentent, du fait de leur structure hétérogène, plusieurs températures de transition vitreuse.

On entend par le terme « **copolymère à blocs polyéther et blocs polyamide** », aussi appelé « **PEBA** » ou « polyétheramide » désigner des copolymères blocs au sens ci-dessus, comprenant des blocs de polyamide et des blocs polyéther. Ces polymères sont disponibles dans le commerce, ils sont vendus par exemple par la société Arkema France sous la marque PEBAX^{®}.

Le terme « **monomère** » doit être pris dans le cadre des polyamides au sens d'« unité répétitive ». En effet, le cas où une unité répétitive du polyamide est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à polymériser.

On entend par le terme « **polymère amorphe** » désigner les polymères présentant une enthalpie de fusion, telle que mesurée par calorimétrie différentielle lors de la deuxième chauffe avec une vitesse de chauffe de 20°C/min, au plus égale à 30 J/g, en particulier comprise entre 2 et 30 J/g ou en alternative égale à 0 J/g.

On entend par le terme « **polymère sous forme de particules cœur-écorce** » désigner un polymère sous forme de particules, généralement sphériques, possédant des parties de composition différente. Ces particules peuvent être obtenues par un procédé à plusieurs étapes dans lequel on fabrique dans une première étape des particules notamment sphériques, lesquelles sont, dans une étape subséquente, enrobée d'un polymère distinct formant une enveloppe, aussi appelée écorce.

On entend par le terme « **température de fusion** » désigner la température à laquelle un polymère au moins partiellement cristallin passe d'un état solide à l'état liquide visqueux, telle que mesurée par analyse calorimétrique différentielle (DSC) selon la norme NF EN ISO 11 357-3 avec une vitesse de chauffe de 20°C/min.

On entend par le terme « **température de transition vitreuse** » ou « **Tg** » désigner la température à laquelle un polymère au moins partiellement amorphe passe d'un état caoutchoutique vers un état vitreux, ou vice versa, telle que mesurée par analyse calorimétrique différentielle (DSC) selon la norme NF EN ISO 11 357-2 avec une vitesse de chauffe de 20°C/min.

On entend par le terme « **transparent** » désigner un matériau possédant, pour une plaque d'une épaisseur de 2mm, une transmittance à 560 nm supérieure à 80% et de préférence supérieure à 90%.

On entend par le terme **« transmittance »** désigner la fraction d'un flux lumineux d'un matériau sous forme de plaque d'une épaisseur de 2 mm pour une longueur d'onde donnée. Sauf mention contraire, la transmittance est mesurée sur un spectrophotomètre Konica-Minolta CM-3610A selon la norme ASTM D 1003-2011 B (Illuminant D65) sur des plaques de 100 x 100 mm d'une épaisseur de 2mm, à 560 nm.

On entend par le terme **« valeur de Haze** » décrire la transparence d'un matériau en termes de diffusion de la lumière à un angle supérieur à 2.5° de la normale observée suite à l'interaction de la lumière avec des inhomogénéités présentes dans le matériau. Sauf mention contraire, la valeur de Haze a été mesurée sur des plaques de 100 x 100 mm ayant une épaisseur de 2mm, à une longueur d'onde de 560 nm et au moyen d'un spectrophotomètre Konica-Minolta CM-3610A selon la norme ASTM D 1003-2011 B.

On entend par le terme **« résistance au choc ou résistance à l'impact »** désigner l'énergie de choc absorbée par la rupture d'une éprouvette entaillée rapportée à la section droite initiale de l'éprouvette au niveau de l'entaille selon Charpy avec entaille en V, mesurée en kJ/m² selon la norme ISO 179-1 :2010/1eA sur un échantillon de type 1, 80 mm x 10 mm x 4 mm. Sauf mention contraire, la résistance au choc est mesurée à 23°C.

On entend par le terme « **indice de réfraction** » se référer à l'indice mesuré selon la norme ISO 489:1999, en utilisant une longueur d'onde de 590nm, et à une température de 23°C.

On entend par le terme « **module de flexion** » désigner le module de flexion de la composition polymérique mesuré selon la norme ISO178 :2010 sur un échantillon de dimension 80 mm x 10 mm x 4 mm.

### Le polyamide amorphe transparent

Selon l'invention, la composition polymérique comporte une proportion majoritaire d'un polyamide amorphe transparent au sens défini précédemment.

Il peut s'agir d'un polyamide ou d'un copolyamide. De tels polyamides sont notamment décrits dans les documents EP 1 595 907 A1 et WO 09 153 534 A1.

Dans une première variante, le polyamide amorphe peut être de formule A/XY dans laquelle A est un motif répétitif aliphatique et XY est un motif répétitif obtenu à partir de la polycondensation d'au moins une diamine aliphatique linéaire ou ramifiée ou d'un mélange de deux ou plusieurs de celles-ci et d'au moins un diacide carboxylique aliphatique.

De préférence, le motif répétitif aliphatique A est obtenu à partir de la polycondensation d'un acide aminocarboxylique comprenant de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante, le motif répétitif aliphatique A est obtenu à partir de la polycondensation d'un lactame comprenant de 9 à 12 atomes de carbone. Il peut ainsi être choisi parmi le décanolactame (noté 10), l'undécanolactame (noté 11) et le laurolactame ou lauryllactame (noté 12), avantageusement le lactame est le l'undécanolactame.

De manière plus particulièrement préférée, le motif répétitif A est obtenu à partir d'un seul acide aminocarboxylique ou d'un seul lactame.

Toutefois, on peut tout à fait envisager de mettre en œuvre, pour l'obtention de ce même motif A, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

Le motif répétitif XY est de préférence un motif obtenu à partir de la polycondensation d'au moins une diamine aliphatique linéaire ou ramifiée ou d'un mélange de deux ou plusieurs de celles-ci et d'au moins un diacide carboxylique aliphatique.

La diamine ainsi que le diacide carboxylique comprennent de préférence chacun de 4 à 36 atomes de carbone et, avantageusement, de 6 à 18 atomes de carbone.

La diamine aliphatique utilisée pour l'obtention de ce motif répétitif XY est de préférence une diamine aliphatique qui présente une chaine principale linéaire comprenant au moins 4 atomes de carbone.

Cette chaine principale linéaire peut, le cas échéant, comporter un ou plusieurs substituant méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituant méthyle et/ou éthyle sur la chaine principale, la diamine aliphatique utilisée pour l'obtention de ce motif répétitif XY comprend généralement de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule H₂N-(CH₂)ₓ-NH₂ et peut être choisie par exemple parmi la butanediamine, la pentanediamine, l'hexanediamine, l'heptanediamine, l'octanediamine, la nonane-diamine, la décanediamine, l'undécanediamine, la dodécanediamine, la tridécanediamine, la tétradécanediamine, l'hexadécanediamine, l'octadécanedia-mine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine,.

Le diacide carboxylique peut être choisi parmi les diacides carboxyliques aliphatiques, linéaires ou ramifiés.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

A titre d'exemple, les motifs XY peuvent être choisis parmi le polydécaméthylène dodécanamide (PA 1012); le polydécaméthylène sébaçanamide (PA 1010) et le polydodecaméthylène dodécanamide (PA 1212), avantageusement le motif XY représente le polydécaméthylène sébaçanamide (PA 1010).

Les proportions molaires en diamine et en diacide carboxylique sont préférentiellement stœchiométriques.

De préférence, le polyamide amorphe comprend plus de 50% molaire d'une association équimolaire d'au moins une diamine cycloaliphatique et d'au moins un diacide carboxylique aliphatique ou aromatique, ayant de 10 à 36, de préférence de 10 à 18, atomes de carbone. De tels polyamides présentent en effet une transparence élevée.

Selon un mode de réalisation préféré, le polyamide amorphe utilisé comprend plus de 70%, de préférence plus de 80%, de préférence plus de 90%, de préférence 100%, molaire, d'une association équimolaire d'au moins une diamine cycloaliphatique et d'au moins un diacide carboxylique aromatique ou aliphatique, de préférence linéaire, ayant de 10 à 18 atomes de carbone.

La diamine cycloaliphatique peut être choisie parmi : la bis(3,5-dialkyl-4-aminocyclohexyl)methane, la bis(3,5-dialkyl-4-aminocyclohexyl)ethane, la bis(3,5-dialkyl-4-aminocyclohexyl)-propane, la bis(3,5-dialkyl-4-aminocyclo-hexyl)butane, la bis-(3-méthyl-4-aminocyclohexyl)-méthane (abrégé « BMACM » ou « MACM » ou « B »), la p-bis(aminocyclohexyl)-methane (PACM), l'isopropylidene-di(cyclohexylamine) (PACP), l'isophoronediamine (IPD), la 2,6-bis(amino méthyl)norbornane (BAMN), et leurs mélanges. Parmi ces diamines, la bis-(3-méthyl-4-aminocyclohexyl)-méthane (abrégé « BMACM » ou « MACM » ou « B ») est particulièrement préférée. De préférence, le polyamide amorphe est obtenu avec une seule diamine cycloaliphatique.

Au moins une diamine non cycloaliphatique peut entrer dans la composition des monomères des polyamide, à raison d'au plus 30% molaire (en moles) par rapport aux diamines de ladite composition. Comme diamine non cycloaliphatique, on peut citer les diamines aliphatiques linéaires, telles que la 1,4-tétraméthylène diamine, la 1,6-hexaméthylènediamine, la 1,9-nonadiamine et la 1,10-décaméthylènediamine.

Le diacide carboxylique aliphatique en C10 à C18 est de préférence choisi parmi l'acide 1,10-décanedicarboxylique ou acide sébacique, l'acide 1,12-dodécanedicarboxylique, l'acide 1,14-tétradécanedicarboxylique et l'acide 1,18-octadécanedicarboxylique. Le diacide carboxylique peut éventuellement être au moins partiellement branché par au moins un groupement alkyle en C1 à C3 (ayant 1 à 3 atomes de carbone). Parmi ces diacides, l'acide sébacique est particulièrement préféré. De préférence, le polyamide amorphe est obtenu avec un seul diacide.

Au moins un diacide carboxylique non aliphatique peut entrer dans la composition des monomères du polyamide, de préférence à raison d'au plus 15% molaire par rapport aux diacides carboxyliques des polyamides. De préférence, le diacide carboxylique non aliphatique est choisi parmi les diacides aromatiques, en particulier l'acide isophtalique (I), l'acide téréphtalique (T) et leurs mélanges.

De préférence, les polyamides amorphes sont formés essentiellement (à plus de 60 %, de préférence plus de 70%, encore préféré plus de 80% et en particulier plus de 90% molaire) à partir d'au moins un motif XY choisi parmi B10, B12, B14, B16, B18, et leurs mélanges, de sorte à former des copolymères (copolyamides) statistiques et/ou à blocs.

Lesdits polyamides amorphes peuvent éventuellement comprendre moins de 40%, de préférence moins de 30%, encore préféré moins de 20% molaire de d'au moins un comonomère de polyamide, c'est-à-dire un monomère de composition différente de ladite association équimolaire majoritaire définie précédemment. Ledit au moins un comonomère peut être choisi parmi les lactames, les acides alpha-oméga aminocarboxyliques et les associations diamine.diacide différentes de celle définie précédemment, et leurs mélanges. En tout état de cause, les dits polyamides amorphes ne comportent pas d'unités de répétition à base de blocs polyéther et sont donc différents des PEBA.

Le lactame peut être par exemple choisi parmi le caprolactame, l'oenantholactame et le lauryllactame. A titre d'acide alpha-oméga aminocarboxylique, on peut mentionner par exemple l'acide aminocaproïque, l'acide amino-7-heptanoïque, l'acide amino-11-undécanoïque ou l'acide amino-12-dodécanoïque. Un comonomère préféré est un lactame ou un acide alpha-oméga aminocarboxylique et parmi ceux-ci en particulier le lauryllactame et l'acide amino-11 undécanoïque.

Des exemples de polyamides amorphes comprennent notamment : le polyamide PA 12/MACMI (PA 12/3,3-diméthyl-4 ,4-diaminocyclohexylmethane, l'acide isophtalique), PA 12/MACMT (PA 12/3,3-diméthyl-4 ,4-diaminocyclohexylmethane, l'acide téréphtalique), le PA MACM12 (3,3-diméthyl-4 ,4-diaminocyclohexylmethane, l'acide décanedicarboxylique ou laurolactame), PA MC12 (PA12, le 1,3-bis(aminométhyl) cyclohexane), PA 11/B10, PA 11/B14, et PA B10.

On peut utiliser les polyamides disponibles sur le marché sous la dénomination de Grilamid TR55^{®} contenant du PA 12/MACMI, Grilamid TR90^{®} contenant du PA MACM12 (fabriqués par EMS Chemie), Trogamid CX^{®} contenant du PA MC12 (fabriqué par Evonik Degussa-Chemie), et Rilsan^{®} Clear contenant du PA 12/MACMI/MACMT (fabriqué par ARKEMA).

De préférence, le polyamide amorphe choisi est rigide, c'est-à-dire présente un module de flexion ISO > 1300 MPa. Par ailleurs, le polyamide amorphe présente de préférence une température de transition vitreuse Tg supérieure à 75°C et ne se déforme donc pas à chaud, à 60°C.

Selon l'invention, la composition polymérique comprend de 50 à 98 % en poids de polyamide amorphe transparent. De préférence, la composition comporte de 60 à 97% en poids, et en particulier de 70 à 96% en poids, et tout particulièrement de 80 à 95% en poids de polyamide amorphe transparent.

### Le polymère sous forme de particules cœur/écorce

Afin d'améliorer la résistance à l'impact, la composition polymérique selon l'invention comporte outre le polyamide amorphe en outre un polymère sous forme de particules cœur/écorce tel que défini précédemment.

Le polymère sous forme de particules cœur/écorce présente de préférence un indice de réfraction proche du polyamide amorphe, afin de ne pas opacifier la composition, ce qui se traduit par une valeur de Haze plus élevée. L'indice de réfraction de ce composant ne diffère pas de celui du polyamide amorphe transparent de plus de 0.01, et plus préféré 0.005 et tout particulièrement 0.002. Le diamètre moyen en poids des particules cœur/écorce tel que mesuré par microscopie électronique en transmission est généralement compris entre 20 nm et 500 nm, de préférence entre 20 et 350 nm, et tout particulièrement entre 20 et 300 nm.

Avantageusement, les particules cœur/écorce comprennent un cœur (A) comprenant un polymère (A1) ayant une température de transition vitreuse inférieure à 0°C et une écorce (B) comprenant un polymère (B1) présentant une température de transition vitreuse supérieure à 60°C. De préférence, le polymère (A1) possède une température de transition vitreuse inférieure à -5°C, de préférence inférieure à -15°C et tout particulièrement inférieure à -25°C. De préférence, le polymère (B1) possède une température de transition vitreuse supérieure à 70°C, notamment supérieure à 90°C et en particulier supérieure à 100°C.

Ces particules cœur/écorce sont obtenues par un procédé à plusieurs étapes, tel que décrit par exemple dans les brevets EP 1 844 086 ou EP 0 722 961. Généralement, le polymère (A1) dans le cœur (A) est fabriqué dans une première étape et le polymère (B1) dans l'écorce (B) est fabriqué dans une seconde ou dernière étape du procédé. Entre le cœur et l'écorce, il peut y avoir une ou plusieurs couches intermédiaires obtenues par des étapes intermédiaires supplémentaires.

Avantageusement, la teneur en groupes aromatiques est limitée dans les particules cœur/écorces. Ainsi, le polymère (A1) et le cœur (A) comprend de préférence 0 à moins de 50% en poids de monomères à groupes aromatiques. De même, le polymère (B1) et l'écorce (B) comprennent de préférence 0 à moins de 50% en poids de monomères à groupes aromatiques. Il est particulièrement préféré que le polymère (B1) et l'écorce (B) soient essentiellement exempts de monomères à groupes aromatiques.

Le polymère (A1) comprend de préférence au moins 50% en poids d'unités de répétition issues d'isoprène ou butadiène. Ainsi, le polymère (A1) peut comprendre des homopolymères isoprène ou butadiène, des copolymères isoprène-butadiène, des copolymères butadiène-styrène, et des copolymères d'isoprène avec jusqu'à 98% en poids d'un ou plusieurs autres monomères vinyliques, par exemple le styrène, un alkylstyrène, l'acrylonitrile, un (méth)acrylate d'alkyle, le butadiène ou un de leurs mélanges, sous réserve que le polymère (A1) comprenne moins de 50% en poids de monomères à groupements aromatiques.

Le polymère (A1) dans les particules cœur/écorce peut être réticulé. Les monomères ou agents de réticulation peuvent être choisis notamment parmi les composés vinyliques polyfonctionnels aromatiques tes que le divinylbenzène et le divinyltoluène, les alcools polyhydriques tels que le diméthacrylate d'éthylène glycol et le diacrylate de 1,3-butanediol, les triméthacrylates, les allylcarboxylates tels que l'allylacrylate et l'allylméthacrylate, et les composés di- et triallyliques tels que le diallyl phtalate, diallyl sébacate, et la triallyltriazine.

Les polymères (A1) particulièrement préférés sont le homopolymère butadiène et les copolymères butadiène-styrène. Avantageusement cependant, le polymère (A1) ne comprend pas de styrène ou d'autres monomères aromatiques à l'exception d'agents de réticulation.

De préférence, le polymère (A1) possède une température de transition vitreuse Tg comprise entre - 100°C et 10°C, avantageusement entre -80°C et 0°C et encore préféré entre -70°C et -20°C.

La proportion en poids du polymère (A1) dans le cœur (A) par rapport au polymère cœur-écorce fini est d'au moins 60%, de préférence au moins 70% et encore préféré au moins 75% en poids. Le cœur (A) peut également comporter le polymère (A1) comme seul composant polymérique.

Le polymère (B1) et la écorce (B) est de préférence un homopolymère ou copolymère (méth)acrylique. Particulièrement préférés est un polymère comprenant au moins 70% en poids de monomères choisis parmi des (méth)acrylates d'alkyle en C1 à C12, notamment un polymère comprenant au moins 80% en poids de (méth)acrylates d'alkyle en C1 à C4 et/ou d'acrylates d'alkyle en C1 à C8. Particulièrement préféré est un polymère issu de monomères choisis parmi le méthylacrylate, l'éthylacrylate, le butylacrylate, le méthylméthacrylate, l'éthylméthacrylate, le butylméthacrylate et leurs mélanges.

Le polymère (B1) peut par ailleurs comprendre des unités répétitives issues de monomères fonctionnels choisis parmi le glycidyl(méth)acrylate, l'acide acrylique ou méthacrylique, les amides dérivés de ces acides tels que le diméthylacrylamide, le 2-méthoxyéthylacrylate ou méthacrylate, le 2-aminoéthylacrylate ou méthacrylate ainsi que leurs mélanges.

Le polymère (B1) peut être réticulé. Les monomères ou agents de réticulation peuvent être choisis notamment parmi les composés vinyliques polyfonctionnels aromatiques tes que le divinylbenzène et le divinyltoluène, les alcools polyhydriques tels que le diméthacrylate d'éthylène glycol et le diacrylate de 1,3-butanediol, les triméthacrylates, les allylcarboxylates tels que l'allylacrylate et l'allylméthacrylate, et les composés di- et triallyliques tels que le diallylphtalate, diallylsébaçate, et la triallyltriazine.

Les polymères (B1) particulièrement préférés comprennent au moins 70% en poids d'unités répétitives issus de méthylméthacrylate. Selon un mode de réalisation préféré, le polymère (B1) ne comprend pas de styrène ou d'autres monomères aromatiques à l'exception d'agents de réticulation.

De préférence, le polymère (B1) possède une température de transition vitreuse Tg comprise entre 60°C et 150°C, avantageusement entre 80°C et 150°C, encore préféré entre 90°C et 150°C et tout particulièrement entre 100 et 150°C.

La proportion en poids du polymère (B1) dans l'écorce (B) par rapport au polymère cœur-écorce fini est de préférence de 5 à 30% en poids. La proportion en poids de l'écorce (B) par rapport au polymère cœur-écorce fini est avantageusement d'au moins 5% en poids, de préférence au moins 6% et encore préféré au moins 7% en poids.

De préférence, le polymère (B1) est greffé sur le polymère préparé à l'étape précédente, notamment le polymère A1, dans le cas où les particules cœur/écorce ne comportent que deux parties distinctes.

Des polymères sous forme de particules cœur-écorce appropriés sont disponibles dans le commerce, par exemple sous le nom de Clearstrength^{®} E 950 chez la société Arkema France.

### Le copolymère à blocs polyéther et à blocs polyamide (PEBA)

La composition selon l'invention comprend à titre de modifiant choc en plus du polymère sous forme de particules cœur/écorce au moins un copolymère à blocs polyéther et blocs polyamide (PEBA). Afin d'optimiser la transparence de la composition, le copolymère bloc présente des caractéristiques particulières.

Tout d'abord, le copolymère à blocs polyéther et blocs polyamide est transparent au sens où il présente, en couche de 2 mm, une transmittance à 560 nm de 90% ou plus.

Ensuite, le PEBA présente un indice de réfraction proche du polyamide amorphe. L'indice réfraction de ce composant ne diffère pas de celui du polyamide amorphe de plus de 0.01, et plus préféré 0.005 et tout particulièrement 0.002.

De préférence, il est en outre amorphe, c'est-à-dire que son enthalpie de fusion est au plus égale à 30 J/g, la masse étant rapportée à la quantité de motifs amide contenus dans le copolymère, cette fusion correspondant à celle des motifs amides. De tels copolymères à blocs polyéther et blocs polyamide amorphes sont décrits par exemple dans la demande de brevet WO 2008/006987, page 5 ligne 19 à page 9 ligne 35.

Les copolymères à blocs polyéther et blocs polyamide résultent de la polycondensation de blocs polyamides à extrémités réactives avec des blocs polyéthers à extrémités réactives. On peut ainsi obtenir des PEBA par réaction de :
1) blocs polyamides à bouts de chaîne diamines avec des blocs polyoxyalkylènes à bouts de chaîne dicarboxyliques ;
2) blocs polyamides à bouts de chaîne dicarboxyliques avec des blocs polyoxyalkylènes à bouts de chaîne diamines ; et
3) blocs polyamides à bouts de chaînes dicarboxyliques avec des polyétherdiols, les produits obtenus étant alors appelés des polyétheresteramides.

Les blocs polyamide représentent avantageusement 20 à 90% en poids, de préférence de 40 à 80% en poids, encore préféré de 60 à 80% en poids, sur le poids total du copolymère.

La masse molaire en nombre Mn des blocs polyamides est de préférence comprise entre 400 et 20000 g/mole et en particulier entre 500 et 12000 g/mole, et tout particulièrement entre 2000 et 6000 g/mol. Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone, et d'une diamine aliphatique ou arylaliphatique, en particulier celles ayant de 2 à 20 atomes de carbone, de préférence celles ayant de 6 à 14 atomes de carbone.

A titre d'exemples d'acides dicarboxyliques, on peut citer l'acide 1,4- cyclohexyldicarboxylique, l'acide 1,2-cyclohexyldicarboxylique, les acides 1,4- butanedioïque, adipique, azélaïque, subérique, sébacique, 1,12- dodécanedicarboxylique, 1,14-tétradécanedicarboxylique, 1,18-octadécanedicarboxylique, les acides téréphtalique et isophtalique, l'acide naphtalènedicarboxylique, mais aussi les acides gras dimérisés.

A titre d'exemples de diamines, on peut citer la 1,5-tétraméthylènediamine, la 1,6-hexaméthylènediamine, la 1,10-décaméthylènediamine, la 1,12- dodécaméthylènediamine, la triméthyl-1,6-hexaméthylènediamine, la 2-méthyl-1,5- pentaméthylènediamine, les isomères des bis(3-méthyl-4-aminocyclohexyl)méthane (BMACM), et 2,2-bis(3-méthyl-4-aminocyclohexyl)-propane (BMACP), et pbis( aminocyclohexyl)-méthane (PACM), et l'isophoronediamine (IPD), la 2,6-bis-(aminométhyl)-norbornane (BAMN), et la pipérazine (Pip), et la métaxylylènediamine (MXD), et la paraxylylènediamine (PXD). Avantageusement, une seule diamine cycloaliphatique, en particulier le BMACM, est utilisé comme diamine.

Au moins une diamine non cycloaliphatique peut également entrer dans la composition des monomères des motifs amides, de préférence à raison d'au plus 30% en moles par rapport au total des diamines. Comme diamine non cycloaliphatique, on peut citer les diamines aliphatiques linéaires, telles que la 1,4-tétraméthylène diamine, la 1,6-hexaméthylènediamine, la 1,9-nonaméthylènediamine et la 1,10-décaméthylènediamine.

Le ou les diacides carboxyliques aliphatiques peuvent être de préférence choisis parmi les diacides carboxyliques aliphatiques, notamment linéaires, ayant de 6 à 36 atomes de carbone, de préférence de 9 à 18 atomes de carbone, en particulier l'acide 1,10-décanedicarboxylique (acide sébacique), l'acide 1,12-dodécanedicarboxylique, l'acide 1,14-tétradécanedicarboxylique et l'acide 1,18-octadécanedicarboxylique.

Au moins un diacide carboxylique non aliphatique peut entrer dans la composition des monomères des motifs amides, de préférence à raison d'au plus 15 % en moles par rapport au total des diacides carboxyliques. De préférence, le diacide carboxylique non aliphatique est choisi parmi les diacides aromatiques, en particulier l'acide isophtalique (I), l'acide téréphtalique (T) et leurs mélanges.

Un ou des monomères peuvent entrer de façon minoritaire dans la préparation des motifs amides. Ils peuvent être choisis notamment parmi les lactames et les acides alpha-oméga amino-carboxyliques.

Le lactame est, par exemple, choisi parmi le caprolactame, l'oenantholactame et le lauryllactame.

L'acide alpha-oméga aminocarboxylique est, par exemple, choisi parmi l'acide aminocaproïque, l'acide amino-7-heptanoïque, l'acide amino-11-undécanoïque ou l'acide amino-12-dodécanoïque.

Avantageusement, le nombre de carbones par amide dans les blocs polyamide est en moyenne au moins égal à 9.

Les blocs polyamide sont de préférence choisis parmi les blocs PA B6, PA B9, PA B10, PA B12, PA B14, PA B16, PA B18 et leurs mélanges.

Avantageusement, de tels blocs polyamide sont choisis parmi les suivants : PA 412, PA 414, PA 418, PA 610, PA 612, PA 614, PA 618, PA 912, PA 1010, PA 1012, PA 1014, PA 1018, PA MXD6, PA PXD6, PA MXD10, PA PXD10, PA B6, PA B9, PA B10, PA B12, PA B14, PA B16, PA B18 et leurs mélanges.

A noter que dans la notation PA XY, X représente le nombre d'atomes de carbone issu des résidus de diamine, et Y représente le nombre d'atomes de carbone issu des résidus de diacide (de façon conventionnelle), lorsqu'il s'agit de chiffres. La lettre B représente le résidu issu de la diamine BMACM, MXD représente le résidu issu de la m-xylylènediamine et PXD représente le résidu issu de la p-xylynènediamine.

Selon un deuxième type, les blocs polyamides résultent de la condensation d'un ou plusieurs acides alpha-oméga-aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha-omega-aminocarboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha-oméga-aminocarboxylique (ou un lactame), au moins une diamine et au moins un diacide carboxylique. Dans ce cas, on prépare les blocs polyamide par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stœchiométrie de la ou des diamines.

Selon une variante de ce troisième type, les blocs polyamides résultent de la condensation d'au moins deux acides alpha-oméga-aminocarboxyliques ou d'au moins deux lactames ayant de 6 à 12 atomes de carbone ou d'un lactame et d'un acide alpha-oméga-aminocarboxylique n'ayant pas le même nombre d'atomes de carbone en présence éventuelle d'un limiteur de chaîne. A titre d'acide alpha-oméga-aminocarboxylique aliphatique, on peut citer les acides aminocaproïques, amino-7-heptanoïque, amino-11-undécanoïque et amino-12-dodécanoïque. A titre de lactame, on peut citer le caprolactame, l'oenantholactame et le lauryllactame. A titre de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre de diacides aliphatiques, on peut citer les acides butanedioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque Pripol^{®} par la société Unichema, ou sous la marque Empol^{®} par la société Henkel) et les polyoxyalkylènes - α,ω diacides. A titre d'exemple de diacides aromatiques, on peut citer l'acide téréphtalique (T) et isophtalique (I). A titre d'exemple de diamines cycloaliphatiques, on peut citer les isomères des bis-(3-méthyl-4- aminocyclohexyl)méthane (BMACM ou B), et 2-2-bis-(3-méthyl-4-aminocyclohexyl)- propane (BMACP), et p-bis(aminocyclohexyl)-méthane (PACM ou P). Les autres diamines couramment utilisées peuvent être l'isophoronediamine (IPD), la 2,6-bis (aminométhyl)-norbornane (BAMN) et la pipérazine. A titre d'exemple de diamines arylaliphatiques on peut citer la métaxylylènediamine (MXD) et paraxylylènediamine (PXD).

Particulièrement préférés comme blocs polyamide du troisième type sont le 6.6/6 et le 6.6/6.10/11/12.

Les blocs polyéther représentent avantageusement 10 à 80% en poids, de préférence de 20 à 60% en poids, encore préféré de 20 à 40% en poids, sur le poids total du copolymère.

La masse moléculaire moyenne en nombre des blocs PE est avantageusement comprise entre 200 et 4000 g/mol, de préférence entre 300 et 1100 g/mol.

La masse moléculaire en nombre des blocs polyéther peut être comprise entre 200 et 1000 g/mol, de préférence comprise dans la gamme de 400 à 800 g/mol, de préférence de 500 à 700 g/mol.

Les blocs polyéther peuvent être issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G), le polytétraméthylène glycol (PTMG) et leurs mélanges ou leurs copolymères. Les blocs polyéther peuvent comprendre des séquences polyoxyalkylène à bouts de chaînes amine, de telles séquences pouvant être obtenues par cyanoacétylation de séquences polyoxyalkylène alpha-oméga dihydroxylés aliphatiques appelées polyétherdiols. Plus particulièrement, on pourra utiliser les Jeffamines (Par exemple Jeffamine^{®} D400, D2000, ED 2003, XTJ 542, vendues par la société Huntsman). Il est renvoyé à cet égard aux documents JP 2004346274, JP 2004352794 et EP 1482011. De préférence, les blocs polyéther comprennent ou sont constitués de polytétraméthylène glycol (PTMG).

Dans ces copolymères, les blocs polyamide comprennent de préférence plus de 50% molaire d'une association équimolaire d'au moins une diamine cycloaliphatique et d'au moins un diacide carboxylique aliphatique. De préférence, le diacide carboxylique aliphatique est à plus de 50% molaire, de préférence à plus de 70%, en particulier à plus de 80%, et en particulier à plus de 90% et tout particulièrement à 100% linéaire, ayant de 8 à 36, de préférence 8 à 16 atomes de carbone. En effet, de tels blocs polyamide contribuent à une transmittance élevée du copolymère.

Ces copolymères peuvent être préparés par exemple par le procédé suivant lequel :
- dans une première étape, on prépare les blocs polyamide par polycondensation
   ■ de la ou des diamines ;
   ■ du ou des diacides carboxyliques ; et
   ■ le cas échéant, du ou des comonomères choisis parmi les lactames et les acides alpha-oméga aminocarboxyliques ;
   ■ en présence d'un limiteur de chaîne choisi parmi les diacides carboxyliques ; puis
- dans une seconde étape, on fait réagir les blocs polyamide obtenus avec des blocs polyéther, en présence d'un catalyseur.

La méthode générale de préparation en deux étapes des copolymères de l'invention est connue et est décrite, par exemple, dans les documents FR 2846332 et EP 1482011.

La réaction de formation du bloc polyamide peut se faire notamment à une température de 180 à 300°C, de préférence de 200 à 290°C. La pression dans le réacteur s'établit de préférence entre 5 et 30 bars, et est maintenue de préférence pendant environ 2 à 3 heures. On peut ensuite réduire lentement la pression du réacteur jusqu'à la pression atmosphérique, puis distiller l'eau excédentaire, par exemple pendant une heure ou deux.

Le bloc polyamide à extrémités acide carboxylique ayant été préparé, on peut ensuite ajouter le bloc PE et un catalyseur. On peut ajouter le bloc polyéther en une ou plusieurs fois, de même pour le catalyseur. Selon une forme avantageuse, on ajoute d'abord le bloc polyéther, la réaction des extrémités OH du bloc PE et des extrémités COOH du bloc polyamide commence avec la formation de liaisons ester et l'élimination d'eau. On élimine le plus possible l'eau du milieu réactionnel par distillation, puis on introduit le catalyseur pour achever la liaison des blocs polyamide et des blocs polyéther. Cette deuxième étape peut être effectuée sous agitation, de préférence sous un vide d'au moins 15 mm Hg (2000 Pa), à une température telle que les réactifs et les copolymères obtenus soient à l'état fondu. A titre d'exemple, cette température peut être comprise entre 100 et 400°C, et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On peut également ajouter pendant la synthèse, au moment jugé le plus opportun, une ou plusieurs molécules utilisées comme antioxydant, par exemple les produits commerciaux Irganox^{®} 1010 ou Irganox^{®} 245.

On peut aussi mettre en œuvre un procédé de préparation de ces copolymères dans lequel tous les monomères sont mis en présence dès le début, soit en une seule étape, pour effectuer la polycondensation :
- de la ou des diamines ;
- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs polyéther; et
- en présence d'un catalyseur pour catalyser la réaction entre les blocs polyéther et les blocs polyamide.

Avantageusement, on utilise comme limiteur de chaîne ledit diacide carboxylique, que l'on introduit en excès par rapport à la stœchiométrie de la ou des diamines.

Avantageusement, on utilise comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation notamment à une température de 240 à 280°C.

Les copolymères peuvent comporter des blocs polyéther hydrophiles, de préférence des blocs polyéther de type PEG, PPG ou PO3G, ce qui confère un surcroît avantageux de propriétés antistatiques et imper-respirantes à la composition (c'est à dire permettant le passage de la vapeur d'eau, mais non de l'eau liquide).

Selon un autre mode de réalisation particulièrement préféré, le copolymère est un copolymère à blocs B.12 et à blocs PTMG.

Selon l'invention, la composition polymérique comprend de 1 à 15 %, de préférence, de 2 à 10%, et en particulier de 3 à 7% en poids de PEBA par rapport au poids total de la composition.

Avantageusement, la composition selon l'invention ne comporte pas d'autres polymères, et notamment pas d'autres polyamides que ceux énoncés.

Elle peut néanmoins comprendre optionnellement 0 à 10% en poids, de préférence 1 à 8% et en particulier 2 à 5% en poids d'additifs habituels, tels que des agents colorants, des pigments, colorants, des agents anti-UV, des agents anti-vieillissement, des agents anti-oxydants, des agents de fluidisation, des agents anti-abrasion, des agents démoulants, des stabilisants, des plastifiants, des agents tensioactifs des azurants, des charges, des fibres, des cires, éventuellement en mélange.

Selon un mode de réalisation particulièrement préféré, la composition polymérique à base de polyamide consiste en :
a) 50 à 98% en poids d'un polyamide amorphe transparent ;
b) 1 à 15% en poids d'un polymère sous forme de particules cœur-écorce ; et
c) 1 à 15% en poids d'un copolymère à blocs polyéther et blocs polyamide ; et
d) 0 à 10% en poids d'additifs,
les proportions respectives des composantes a), b, c) et d) s'additionnant à 100%.

Afin d'ajuster si nécessaire l'indice de réfraction, il est possible de jouer sur la nature des matières premières utilisées pour synthétiser le PEBA et le polyamide. De manière générale, un composé aromatique (par exemple un diacide aromatique) augmentera l'indice de réfraction d'un produit. Pour les PEBA, l'indice de réfraction diminue si on augmente la teneur en polyéther, par rapport au polyamide pur de même composition que le bloc polyamide du PEBA. Dans la série des polyamides de type BMACM.Y, Y étant un diacide aliphatique, l'indice diminue avec la longueur de chaîne de Y. De manière générale, pour un polyamide linéaire aliphatique, l'indice de réfraction diminue avec la longueur de chaîne.

### La fabrication de la composition

La composition selon l'invention peut être obtenue aisément au moyen des procédés habituels.

En particulier, elle peut être obtenue par compoundage des ingrédients polymériques à l'état fondu, par exemple dans une extrudeuse bivis. Les ingrédients sont alors avantageusement introduits à l'aide de doseurs gravimétriques.

### L'utilisation de la composition

La composition selon l'invention peut être utilisée pour fabriquer des granulés ou des poudres, qui peuvent être à leur tour utilisés dans les procédés de mise en forme classique des polymères pour la fabrication de filaments, de tubes, de films, de plaques et /ou d'objets moulés transparents et résistants à l'impact.

Pour le procédé de fabrication d'objets, notamment moulés, injectés ou extrudés selon l'invention, on privilégie les granulés. On utilise plus rarement les poudres de diamètre moyen tel que déterminé par un appareil granulomètre à diffraction laser compris dans la gamme de 400 à 600 µm. Selon un mode particulier de mise en forme du procédé de l'invention, notamment par frittage tel que « laser sintering » ou encore par rotomoulage, les compositions selon l'invention se présentent de préférence sous la forme de poudre dont les particules ont un diamètre médian en volume inférieur à 400 µm, de préférence inférieur à 200 µm. Parmi les méthodes de fabrication de poudre, on peut citer le broyage cryogénique et la microgranulation.

Ladite composition peut être utilisée selon l'invention pour fabriquer des granulés ou des poudres, qui peuvent être à leur tour utilisés dans les procédés de mise en forme classiques des polymères pour la fabrication de filaments, de tubes, de films, de plaques et/ou d'objets moulés transparents. Les procédés de mise en forme envisagés peuvent être notamment le moulage, l'injection, l'extrusion, la coextrusion, la compression à chaud, la multi-injection, le rotomoulage, le frittage ou le laser sintering.

La composition selon l'invention permet l'obtention d'un objet présentant une résistance au choc améliorée sans perte notable en termes de transparence ou de rigidité, comme démontré dans les tableaux des exemples ci-après.

L'invention sera expliquée plus en détail dans les exemples qui suivent.

### [Exemples]

### Exemples 1 à 4

On a introduit dans une extrudeuse bi-vis un polyamide amorphe (Rilsan G850 commercialisé par Arkema France), un polymère sous forme de particules cœur/écorce (MBS E950 commercialisé par Arkema France), et un copolymère à blocs polyéther et blocs polyamide (PEBAX MX1971 commercialisé par Arkema France) dans les proportions précisées dans le tableau 1 ci-dessous. On a obtenu une composition homogène par compoundage des ingrédients à une température de 260 °C.

**Tableau 1 : Composition des compositions polymériques**

| Ingrédients | Exemple 1 | Exemple 2 | Exemple 3 | Exemple 4 | Exemple de comparaison 1 | Exemple de comparaison 2 |
|---|---|---|---|---|---|---|
| Polyamide amorphe [% en poids] | 94 | 90 | 88 | 84 | 95 | 90 |
| Polymère cœur/écorce [% en poids] | 3 | 5 | 5.5 | 8 | 5 | 10 |
| copolymère à blocs polyéther et blocs polyamide [% en poids] | 3 | 5 | 5.5 | 8 | - | - |

Afin d'évaluer les propriétés des compositions préparées, la résilience au choc a été mesurée à température ambiante (23°C) et à froid (-30°C) selon le protocole indiqué dans la norme ISO 179-1/1eA.

Par ailleurs, on a évalué la transparence des compositions en mesurant la transmittance à 560 nm et la valeur de Haze sur des plaques moulées ayant 2 mm d'épaisseur, selon la norme ISO 13468-2 :2006.

**Tableau 2 : Propriétés optiques et mécaniques des compositions polymériques**

| Exemples | Transmittance à 560 nm, épaisseur 2mm [%] | Haze, épaisseur 2 mm [%] | résistance au choc à 23°C [kJ/m²) | résistance au choc à -30°C [kJ/m²) | Module de flexion [MPa] |
|---|---|---|---|---|---|
| Exemple 1 | 90.7 | 2.7 | 26.4 100% casse | 13.2 | 1585 |
| Exemple 2 | 89.7 | 4.6 | >60 100% casse partielle | 17.4 | 1515 |
| Exemple 3 | 89.7 | 4.3 | >60 100% casse partielle | 18.0 | 1500 |
| Exemple 4 | 88.6 | 5.8 | >60 100% casse partielle | 24.0 | 1430 |
| Exemple de comparaison 1 | 88.9 | 4.6 | 25 100% casse | 13 | 1600 |
| Exemple de comparaison 2 | 87.3 | 8.9 | 35 100% casse | 21 | 1530 |

L'ensemble des résultats met en évidence que la composition selon l'invention, dans laquelle un polyamide amorphe est modifié par un PEBA approprié et un polymère sous forme de particules cœur/écorce en association, permet d'améliorer la résistance à l'impact tout en conservant la transparence en termes de transmittance et de valeur de Haze.

L'étude de différentes formulations par rapport aux compositions connues révèle un effet favorable de cette association. En effet, les compositions modifiées présentent une transmittance supérieure à celle des compositions des exemples de comparaison qui sont dépourvues de particules cœur/écorce.

Enfin, il a été vérifié que les compositions présentent une valeur de Haze comparable, voire inférieure à celles observées pour les compositions des exemples de comparaison.

### [Liste des documents cités]

EP 3 215 568 A1
FR 2 965 269 A1

## Revendications

1. Composition polymérique à base de polyamide comprenant :
a) 50 à 98% en poids d'un polyamide amorphe transparent;
b) 1 à 15% en poids d'un polymère sous forme de particules cœur-écorce ; et
c) 1 à 15% en poids d'un copolymère à blocs polyéther et blocs polyamide,
**caractérisée en ce que** ledit copolymère à blocs polyéther et blocs polyamide présente :
- en couche de 2 mm, une transmittance à 560 nm de 90% ou plus et
- un indice de réfraction ne différant pas plus de 0.01 de celui du polyamide amorphe transparent
et **en ce que** le polymère sous forme de particules cœur-écorce présente un indice de réfraction ne différant pas de plus de 0.01 de celui du polyamide amorphe transparent.

2. Composition polymérique selon la revendication 1, dans laquelle le polymère sous forme de particules cœur-écorce ne comporte pas plus de 10% en moles de monomères aromatiques.

3. Composition polymérique selon la revendication 1 ou 2, **caractérisée en ce que** le polyamide amorphe transparent est choisi parmi les polyamides TMDT, TMDI, TMD18, TMD14, TMD12, TMD10, MPMDT, MPMDI, MPMD18, MPMD14, MPMD12, MPDM10, B10, B11, B12, B13, B14, B16, B18,B19, B20, B21, BI, P10, P11, P12, P13, P14, P16, P18, P19, P20, PI, P21, 11/BI, 11/BT, 12/B I, 12/B T, 11/B10, 12/B10, 11/P10, 12/P10, 11/B12, 12/B12, 11/P12, 12/P12, 11/B14, 12/B14, 11/P14, 12/P14, 11/B18, 12/B18, 11/P18, 12/P18, 6.10/BI, 6.10/BT, 10.10/BI, 10.10/BT, 6.12/BI, 612/BI, 1012/BI, 1012/BT, 610/PI, 610/PT, 1010/PI, 1010/PT, 612/PI, 612/PT, 1012/PI, 1012/PT, 610/B10, 610/B12, 610/B14, 610/B18, 1010/B10, 1010/B12, 1010/B14,1010/B18, 1012/B10, 1012/B12, 1012/B14, 1012/B18, 610/P10, 610/P12, 610/P14, 610/P18, 1010/P10, 1010/P12, 1010/P14, 1010/P18, 1012/P10, 1012/P12, 1012/P14, 1012/P18, B10/P10, B12/P12, B14/P14 12/B I/BT, 11/BI/BT, 12/PI/PT, 11/P I/PT, 11/B10/BT, 11/B12/BT, 11/P10/PT, 12/B10/BI, 12/B12/BI, 12/P10/PI, 12/P12/PI, 12/B10/BT, 12/B12/BT, 12/P10/PT, 12/P12/PT, 11/B10/BI, 11/B12/BI, 11/P10/PI, 11/P12/PI, 11/P12/PT, 11/B10/B14, 11/P10/P14, 11/B12/B14, 11/P12/P14, 12/B10/B14, 12/P10/P14, 12/B12/B.4, 12/P12/P14, 11/B10/B12, 11/P10/P12, 12/B10/B12, 12/P10/P12, 11/P12/B12, 12/P12/B12, 11/P10/B10, 12/P10/B10 12/BI., 12/BT, B12, 11/B14 et 11/B10.

4. Composition polymérique selon l'une des revendications 1 à 3, **caractérisée en ce que** le polyamide amorphe transparent est le PA 11/B10.

5. Composition polymérique selon la revendication 4, **caractérisée en ce que** le ratio molaire de l'aminoacide undecanoïque par rapport au nombre de moles de diamine/diacide formant le polyamide dans le polyamide amorphe transparent est compris entre 0.01 et 0.5, de préférence entre 0.1 et 0.4, et encore préférée entre 0.2 et 0.3.

6. Composition polymérique selon l'une quelconque des revendications 1 à 5, **caractérisée en ce que** le polymère sous forme de particules cœur-écorce comprend une couche (A) comprenant un polymère (A1) ayant une température de transition vitreuse Tg_{A1} inférieure à 0 °C et une couche (B) comprenant un polymère (B1) ayant une température de transition vitreuse Tg_{B1} supérieure à 60°C.

7. Composition polymérique selon la revendication 6, **caractérisée en ce que** le polymère (B1) est un polymère (méth)acrylique.

8. Composition polymérique selon la revendication 6 ou 7, **caractérisée en ce que** le polymère (B1) comprend au moins 80 % en poids de monomères méthacrylate d'alkyle en C1 à C4 et/ou de monomères acrylate d'alkyle en C1 à C8.

9. Procédé de fabrication d'une composition polymérique à base de polyamide telle que définie dans les revendications 1 à 8, comprenant l'étape de mélange de
a) 50 à 98% en poids d'un polyamide amorphe transparent ;
b) 1 à 15% en poids d'un polymère sous forme de particules cœur-écorce ; et
c) 1 à 15% en poids d'un copolymère à blocs polyéther et polyamide, **caractérisée en ce que** ledit copolymère à blocs polyéther et polyamide présente :
- en couche de 2 mm, une transmittance à 560 nm de 90% ou plus et
- un indice de réfraction ne différant pas plus de de celui du polyamide amorphe transparent et
**en ce que** le polymère sous forme de particules cœur-écorce présente un indice de réfraction ne différant pas de plus de 0.01 de celui du polyamide amorphe transparent.

10. Composition polymérique susceptible d'être obtenue par le procédé selon la revendication 9.

11. Utilisation de la composition polymérique selon l'une quelconque des revendications 1 à 8 ou 10 pour la fabrication par injection d'articles transparents.

12. Article comprenant une composition selon l'une quelconque des revendications 1 à 8 ou 10 dans au moins une partie ou une couche.

13. Article selon la revendication 12, **caractérisé en ce que** l'article est un objet moulé, une feuille, un profilé, un tube, un corps creux ou un filtre optiquement variable ou une lentille optique, de préférence une lentille ophtalmique, de manière particulièrement préférée un élément à effet de filtre spectral, p. ex. sous la forme d'un verre de lunettes, d'un verre de lunettes de soleil, d'un verre correcteur, d'un filtre optique, de verres d'inspection, de lunettes de sport ou de lunettes de ski, de visières, de lunettes de sécurité, de systèmes d'enregistrement optiques, de débitmètres, de disques de rupture, d'écrans, de stockages de données optiques, de boîtiers ou de parties de boîtiers, notamment pour appareils de rasage, appareils d'épilation, dispositifs de mesure, ou une fenêtre dans des bâtiments ou dans des véhicules, ou est un élément décoratif ou un élément structural, par exemple sous la forme d'un cadre de lunettes ou de cambres de lunettes, d'un jouet, ou sous la forme d'une partie d'une chaussure de sport, ou d'un équipement de golf, notamment d'une balle de golf, ou d'un couvercle, notamment sous la forme d'un boîtier de téléphone portable, d'une partie d'un équipement électronique, de supports de stockage, de clés infrarouges, de dispositifs enregistreurs transportables, d'assistants personnels numériques, de smartphones, d'un revêtement, notamment d'un emballage, d'éléments décoratifs, ou d'un équipement de sport, ou d'un placage, de préférence dans le secteur automobile.

## Patentansprüche

1. Polymerzusammensetzung auf Polyamid-Basis, umfassend:
a) 50 bis 98 Gew.-% eines transparenten amorphen Polyamids;
b) 1 bis 15 Gew.-% eines Polymers in Form von Kern-Schale-Teilchen; und
c) 1 bis 15 Gew.-% eines Copolymers mit Polyetherblöcken und Polyamidblöcken,
**dadurch gekennzeichnet, dass** das Copolymer mit Polyetherblöcken und Polyamidblöcken
- als 2-mm-Schicht eine Durchlässigkeit bei 560 nm von 90 % oder mehr und
- einen Brechungsindex, der sich um nicht mehr als 0,01 von dem Brechungsindex des transparenten
amorphen Polyamids unterscheidet,
aufweist und dass das Polymer in Form von Kern-Schale-Teilchen einen Brechungsindex aufweist, der sich um nicht mehr als 0,01 von dem Brechungsindex des transparenten amorphen Polyamids unterscheidet.

2. Polymerzusammensetzung nach Anspruch 1, wobei das Polymer in Form von Kern-Schale-Teilchen nicht mehr als 10 Mol-% aromatische Monomere umfasst.

3. Polymerzusammensetzung nach Anspruch 1 oder 2, **dadurch gekennzeichnet, dass** das transparente amorphe Polyamid aus den Polyamiden TMDT, TMDI, TMD18, TMD14, TMD12, TMD10, MPMDT, MPMDI, MPMD18, MPMD14, MPMD12, MPDM10, B10, B11, B12, B13, B14, B16, B18, B19, B20, B21, BI, P10, P11, P12, P13, P14, P16, P18, P19, P20, PI, P21, 11/BI, 11/BT, 12/BI, 12/BT, 11/B10, 12/B10, 11/P10, 12/P10, 11/B12, 12/B12, 11/P12, 12/P12, 11/B14, 12/B14, 11/P14, 12/P14, 11/B18, 12/B18, 11/P18, 12/P18, 6.10/BI, 6.10/BT, 10.10/BI, 10.10/BT, 6.12/BI, 612/BI, 1012/BI, 1012/BT, 610/PI, 610/PT, 1010/PI, 1010/PT, 612/PI, 612/PT, 1012/PI, 1012/PT, 610/B10, 610/B12, 610/B14, 610/B18, 1010/B10, 1010/B12, 1010/B14, 1010/B18, 1012/B10, 1012/B12, 1012/B14, 1012/B18, 610/P10, 610/P12, 610/P14, 610/P18, 1010/P10, 1010/P12, 1010/P14, 1010/P18, 1012/P10, 1012/P12, 1012/P14, 1012/P18, B10/P10, B12/P12, B14/P14 12/B I/BT, 11/BI/BT, 12/PI/PT, 11/P I/PT, 11/B10/BT, 11/B12/BT, 11/P10/PT, 12/B10/BI, 12/B12/BI, 12/P10/PI, 12/P12/PI, 12/B10/BT, 12/B12/BT, 12/P10/PT, 12/P12/PT, 11/B10/BI, 11/B12/BI, 11/P10/PI, 11/P12/PI, 11/P12/PT, 11/B10/B14, 11/P10/P14, 11/B12/B14, 11/P12/P14, 12/B10/B14, 12/P10/P14, 12/B12/B.4, 12/P12/P14, 11/B10/B12, 11/P10/P12, 12/B10/B12, 12/P10/P12, 11/P12/B12, 12/P12/B12, 11/P10/B10, 12/P10/B10, 12/BI, 12/BT, B12, 11/B14 und 11/B10 ausgewählt ist.

4. Polymerzusammensetzung nach einem der Ansprüche 1 bis 3, **dadurch gekennzeichnet, dass** es sich bei dem transparenten amorphen Polyamid um PA 11/B10 handelt.

5. Polymerzusammensetzung nach Anspruch 4, **dadurch gekennzeichnet, dass** das Molverhältnis von Aminoundecansäure, bezogen auf die Zahl der Mole von das Polyamid bildendem/bildender Diamin/Disäure in dem transparenten amorphen Polyamid zwischen 0,01 und 0,5, bevorzugt zwischen 0,1 und 0,4 und weiter bevorzugt zwischen 0,2 und 0,3 liegt.

6. Polymerzusammensetzung nach einem der Ansprüche 1 bis 5, **dadurch gekennzeichnet, dass** das Polymer in Form von Kern-Schale-Teilchen eine Schicht (A), die ein Polymer (A1) mit einer Glasübergangstemperatur Tg_{A1} von weniger als 0 °C umfasst, und eine Schicht (B), die ein Polymer (B1) mit einer Glasübergangstemperatur Tg_{B1} von mehr als 60 °C umfasst, umfasst.

7. Polymerzusammensetzung nach Anspruch 6, **dadurch gekennzeichnet, dass** es sich bei dem Polymer (B1) um ein (Meth)acrylpolymer handelt.

8. Polymerzusammensetzung nach Anspruch 6 oder 7, **dadurch gekennzeichnet, dass** das Polymer (B1) 80 Gew.-% C1- bis C4-Alkylmethacrylat-Monomere und/oder C1- bis C8-Alkylacrylat-Monomere umfasst.

9. Verfahren zur Herstellung einer Polymerzusammensetzung auf Polyamid-Basis gemäß den Ansprüchen 1 bis 8, umfassend den Schritt des Mischens von
a) 50 bis 98 Gew.-% eines transparenten amorphen Polyamids;
b) 1 bis 15 Gew.-% eines Polymers in Form von Kern-Schale-Teilchen; und
c) 1 bis 15 Gew.-% eines Copolymers mit Polyetherblöcken und Polyamidblöcken,
**dadurch gekennzeichnet, dass** das Copolymer mit Polyetherblöcken und Polyamidblöcken
- als 2-mm-Schicht eine Durchlässigkeit bei 560 nm von 90 % oder mehr und
- einen Brechungsindex, der sich um nicht mehr als 0,01 von dem Brechungsindex des transparenten amorphen Polyamids unterscheidet,
aufweist und dass das Polymer in Form von Kern-Schale-Teilchen einen Brechungsindex aufweist, der sich um nicht mehr als 0,01 von dem Brechungsindex des transparenten amorphen Polyamids unterscheidet.

10. Polymerzusammensetzung, die durch das Verfahren nach Anspruch 9 erhältlich ist.

11. Verwendung der Polymerzusammensetzung nach einem der Ansprüche 1 bis 8 oder 10 zur Herstellung von transparenten Gegenständen durch Spritzguss.

12. Gegenstand, umfassend eine Zusammensetzung nach einem der Ansprüche 1 bis 8 oder 10 in mindestens einem Teil oder einer Schicht

13. Gegenstand nach Anspruch 12, **dadurch gekennzeichnet, dass** es sich bei dem Gegenstand um einen Formkörper, eine Folie, ein Profil, ein Rohr, einen Hohlkörper oder einen optisch variablen Filter oder eine optische Linse, bevorzugt eine ophthalmische Linse, besonders bevorzugt ein Element mit Spektralfiltereffekt, z. B. in Form eines Brillenglases, eines Sonnenbrillenglases, eines Korrekturglases, eines optischen Filters, von Inspektionsgläsern, von Sportbrillen oder Skibrillen, von Visieren, von Schutzbrillen, von optischen Aufzeichnungssystemen, von Durchflussmessern, von Berstscheiben, von Bildschirmen, von Speichern für optische Daten, von Gehäusen oder Gehäuseteilen, insbesondere für Rasierapparate, Epilationsapparate, Messvorrichtungen oder ein Fenster in Gebäuden oder in Fahrzeugen handelt oder um ein dekoratives Element oder ein Strukturelement, beispielsweise in Form eines Brillengestells oder von Brillenbügeln, eines Spielzeugs oder in Form eines Teils eines Sportschuhs, oder von Golfausrüstung, insbesondere eines Golfballs, oder einer Abdeckung, insbesondere in Form eines Mobiltelefongehäuses, eines Teils eines elektronischen Geräts, von Datenträgern, von Infrarotschlüsseln, von tragbaren Aufzeichnungsgeräten, von persönlichen digitalen Assistenten, von Smartphones, eines Überzugs, insbesondere einer Verpackung, von dekorativen Elementen oder von Sportausrüstung oder eines Furniers, vorzugsweise im Automobilsektor, handelt.

## Claims

1. Polyamide-based polymer composition comprising:
a) 50% to 98% by weight of a transparent amorphous polyamide;
b) 1% to 15% by weight of a polymer in the form of core-shell particles; and
c) 1% to 15% by weight of a polyether block and polyamide block copolymer,
**characterized in that** said polyether block and polyamide block copolymer has:
- as a 2 mm layer, a transmittance at 560 nm of 90% or more and
- a refractive index that does not differ by more than 0.01 from that of the transparent amorphous polyamide
and **in that** the polymer in the form of core-shell particles has a refractive index that does not differ by more than 0.01 from that of the transparent amorphous polyamide.

2. Polymer composition according to Claim 1, wherein the polymer in the form of core-shell particles comprises no more than 10 mol% of aromatic monomers.

3. Polymer composition according to Claim 1 or 2, **characterized in that** the transparent amorphous polyamide is chosen from the TMDT, TMDI, TMD18, TMD14, TMD12, TMD10, MPMDT, MPMDI, MPMD18, MPMD14, MPMD12, MPDM10, B10, B11, B12, B13, B14, B16, B18, B19, B20, B21, BI, P10, P11, P12, P13, P14, P16, P18, P19, P20, PI, P21, 11/BI, 11/BT, 12/BI, 12/BT, 11/B10, 12/B10, 11/P10, 12/P10, 11/B12, 12/B12, 11/P12, 12/P12, 11/B14, 12/B14, 11/P14, 12/P14, 11/B18, 12/B18, 11/P18, 12/P18, 6.10/BI, 6.10/BT, 10.10/BI, 10.10/BT, 6.12/BI, 612/BI, 1012/BI, 1012/BT, 610/PI, 610/PT, 1010/PI, 1010/PT, 612/PI, 612/PT, 1012/PI, 1012/PT, 610/B10, 610/B12, 610/B14, 610/B18, 1010/B10, 1010/B12, 1010/B14, 1010/B18, 1012/B10, 1012/B12, 1012/B14, 1012/B18, 610/P10, 610/P12, 610/P14, 610/P18, 1010/P10, 1010/P12, 1010/P14, 1010/P18, 1012/P10, 1012/P12, 1012/P14, 1012/P18, B10/P10, B12/P12, B14/P14 12/B I/BT, 11/BI/BT, 12/PI/PT, 11/P I/PT, 11/B10/BT, 11/B12/BT, 11/P10/PT, 12/B10/BI, 12/B12/BI, 12/P10/PI, 12/P12/PI, 12/B10/BT, 12/B12/BT, 12/P10/PT, 12/P12/PT, 11/B10/BI, 11/B12/BI, 11/P10/PI, 11/P12/PI, 11/P12/PT, 11/B10/B14, 11/P10/P14, 11/B12/B14, 11/P12/P14, 12/B10/B14, 12/P10/P14, 12/B12/B.4, 12/P12/P14, 11/B10/B12, 11/P10/P12, 12/B10/B12, 12/P10/P12, 11/P12/B12, 12/P12/B12, 11/P10/B10, 12/P10/B10, 12/BI, 12/BT, B12, 11/B14 and 11/B10 polyamides.

4. Polymer composition according to one of Claims 1 to 3, **characterized in that** the transparent amorphous polyamide is PA 11/B10.

5. Polymer composition according to Claim 4, **characterized in that** the molar ratio of aminoundecanoic acid relative to the number of moles of diamine/diacid forming the polyamide in the transparent amorphous polyamide is between 0.01 and 0.5, preferably between 0.1 and 0.4, and more preferably between 0.2 and 0.3.

6. Polymer composition according to any one of Claims 1 to 5, **characterized in that** the polymer in the form of core-shell particles comprises a layer (A) comprising a polymer (A1) having a glass transition temperature Tg_{A1} below 0°C and a layer (B) comprising a polymer (B1) having a glass transition temperature Tg_{B1} above 60°C.

7. Polymer composition according to Claim 6, **characterized in that** the polymer (B1) is a (meth)acrylic polymer.

8. Polymer composition according to Claim 6 or 7, **characterized in that** the polymer (B1) comprises at least 80% by weight of C1 to C4 alkyl methacrylate monomers and/or of C1 to C8 alkyl acrylate monomers.

9. Process for manufacturing a polyamide-based polymer composition as defined in Claims 1 to 8, comprising the step of mixing
a) 50% to 98% by weight of a transparent amorphous polyamide;
b) 1% to 15% by weight of a polymer in the form of core-shell particles; and
c) 1% to 15% by weight of a polyether and polyamide block copolymer,
**characterized in that** said polyether and polyamide block copolymer has:
- as a 2 mm layer, a transmittance at 560 nm of 90% or more and
- a refractive index that does not differ by more than 0.01 from that of the transparent amorphous polyamide and
**in that** the polymer in the form of core-shell particles has a refractive index that does not differ by more than 0.01 from that of the transparent amorphous polyamide.

10. Polymer composition capable of being obtained by the process according to Claim 9.

11. Use of the polymer composition according to any one of Claims 1 to 8 or 10 for the manufacture of transparent articles by injection molding.

12. Article comprising a composition according to any one of Claims 1 to 8 or 10 in at least one part or one layer.

13. Article according to Claim 12, **characterized in that** the article is a molded object, a sheet, a profiled element, a tube, a hollow body or an optically variable filter or an optical lens, preferably an ophthalmic lens, particularly preferably an element with a spectral filter effect, e.g. in the form of a spectacle lens, a sunglasses lens, a corrective lens, an optical filter, inspection glasses, sport goggles or ski goggles, visors, safety spectacles, optical recording systems, flowmeters, rupture disks, screens, optical data storage, housings or parts of housings, especially for shaving appliances, epilation appliances, measuring devices, or a window in buildings or in vehicles, or is a decorative element or a structural element, e. g. in the form of a spectacle frame or spectacle earpieces, a toy, or in the form of a part of a sports shoe, or golf equipment, especially a golf ball, or a cover, in particular in the form of a cell phone case, a part of electronic equipment, storage media, infrared keys, portable recording devices, personal digital assistants, smartphones, a coating, in particular a packaging, of decorative items, or sports equipment, or a veneer, preferably in the automotive sector.
